# EUROPEAN PATENT SPECIFICATION

(11) **EP 3 615 377 B1**
(45) Date of publication and mention of the grant of the patent: **25.08.2021**
(21) Application number: 17730568.7
(22) Date of filing: 27.04.2017
(51) Int. Cl.: B60P 3/10

(54) **VEHICLE FOR HAULING AND LAUNCHING BOATS**
FAHRZEUG ZUM HERAUSHEBEN UND AUSSETZEN VON BOOTE
VÉHICULE DE TRANSPORT ET DE LANCEMENT DE BATEAUX

(43) Date of publication of application: 04.03.2020
(73) Proprietor: Boat Lift S.r.L., 12055 Diano d'Alba (CN) (IT)
(72) Inventor: PIRA, Ezio, 12055 Diano d'Alba (CN) (IT); ANFOSSO, Lorenzo, 12055 Diano d'Alba (CN) (IT)
(74) Representative: Robba, Pierpaolo
(86) International application number: PCT/IB2017/052428
(87) International publication number: WO 2018/197927

(56) References cited:
- EP-A1- 1 561 637
- CA-A1- 2 293 122
- DE-U1-202006 002 519
- US-A- 3 640 413

## Description

### Technical Field

The present invention relates to a vehicle for hauling and launching boats.

### Background Art

Hoisting and handling systems used in the nautical field for hauling and launching boats are known. More particularly, carriages for hauling, launching and transporting a boat are known, which can be moved along a surface such as a ramp, in a harbor or in a shipyard, and comprise a wheel-mounted frame and fittings for hoisting and lowering the boat. Such carriages are also usually self-propelled, being equipped with a motor and a unit, for example of a hydraulic type, for transmitting motion to at least one of the wheel axles.

SE465026 (B) shows an example of a carriage of the aforementioned type provided with a frame extending, in a horizontal plane, according to a substantially "U"-like shape in which two parallel longitudinal beams and a transverse connecting section arranged between the two beams are provided. The frame is provided with axles, two of which are steering axles, for the wheels, as well as with swiveling arms for engaging the hull of the boat by means of specific slings. The hoisting and lowering the hull is effected by controlling the swiveling of the arms by means of hydraulic cylinders. CA 2 293 122 A1 shows another example of such a hoisting and handling system.

The hauling and launching of boats usually involves moving the boat along a plane with variable inclination. A typical example is the dock of a harbor that includes a horizontal floor and an inclined ramp to access the basin where the boat is located or needs to be placed.

Currently known vehicles do not allow the boat to be easily moved between areas with marked slope differences and therefore it is generally necessary to use at least two different vehicles, each equipped to face a specific slope. The boat must therefore be transferred from one vehicle to another with considerable loss of time and risk of damage to the hull.

The main object of the invention is to provide a vehicle for hauling and launching boats that does not have these drawbacks.

A further object of the invention is to provide a vehicle of the aforementioned type that facilitates the operations of hauling and launching boats in and from basins connected to ramps even with pronounced and variable slope.

Another object of the invention is to provide a vehicle of the aforementioned type that is capable of hauling and launching boats in basins having an inclined bottom, even with a slope other than that of the access ramp to the basin.

A not least object of the invention is to provide a vehicle for hauling and launching boats that can be made in any suitable size and therefore be used both for large and small sized boats.

These and other objects are achieved with the vehicle for hauling and launching boats as claimed in the appended claims.

### Disclosure of the Invention

The vehicle for hauling and launching boats according to the invention is defined by claim 1 and comprises a lower frame provided with a pair of longitudinal beams. The beams are inferiorly associated to devices for handling the vehicle and are mutually connected by means of at least one cross-bar. The frame has therefore a substantially "U"-shaped or "H"-shaped configuration. Additional stiffening transverse bars or tie rods may be provided if necessary. The lower frame can be made as a variable track frame, for example by providing a hydraulically controlled telescopic cross-bar. Advantageously in this way it will be possible to reduce the space intended for storing the vehicle.

The handling devices preferably include carriages that are swiveling with respect to the frame. The carriages are equipped with wheels or, more preferably, with crawler tracks. The movement of the wheels or crawler tracks is preferably controlled hydraulically.

The vehicle further comprises an upper support structure adapted to support the hull of a boat relative to the lower frame of the vehicle. The support structure is provided with a pair of longitudinal bars equipped with transverse slings for carrying the boat hull. The support structure therefore defines a corresponding cradle in which the hull of the boat is received.

According to the invention, swiveling posts are provided between the lower frame and the upper support structure. The swiveling posts are inferiorly hinged to the beams of the frame and superiorly to the bars of the support structure. Said posts are three in number for each side of the vehicle. In addition, the middle post has a fixed length, whereas the two posts adjacent thereto are telescopic. Still according to the invention, the upper support structure is therefore articulated to the lower frame so as to vary its distance and/or inclination relative to the frame depending on the inclination and extension of the telescopic posts. Still according to the invention, the distance between the lower hinge pin of the middle post and the lower hinge pin of a first adjacent post is substantially the same as the distance between the upper hinge pins of said adjacent posts and the distance between the lower hinge pin of the middle post and the lower hinge pin of a third, adjacent post is substantially thrice the distance between the upper hinge pins of said last-mentioned posts. The posts located at the ends are advantageously provided with means capable of extending and shortening said posts. Said means are for example hydraulic cylinders housed within the posts or mounted outside. The hydraulic cylinders are associated to a hydraulic circuit connected to a hydraulic control unit.

In a first embodiment of the invention, the means capable of causing the extension and shortening of the posts are manually controlled by an operator through the hydraulic control unit, for example by means of pushbuttons, levers, a remote control, or a joystick. Advantageously, according to this embodiment of the invention, the hull of the boat received in the supporting structure is maintained, by the operator, with the desired inclination with respect to the plane on which the vehicle travels. Such inclination may in particular be manually maintained at an angle such that the hull is substantially parallel to the water plane of the basin where the vehicle is effecting the hauling and/or launching. Such a configuration can be maintained with continuity, as the vehicle advances on land even with varying slopes.

In another embodiment of the invention, the means for causing the extension and shortening of the posts are controlled by an electronic control unit programmed to control said means according to the signal generated by at least one electronic level or similar inclination measuring sensor. Advantageously, according to this embodiment of the invention, the hull of the boat is automatically maintained with the desired inclination with respect to the plane on which the vehicle travels. Such inclination can be maintained, for example, automatically and consistently during movement of the vehicle, at an angle such that the hull received on the vehicle is substantially parallel to the water plane of the basin where the vehicle is effecting the hauling and/or launching.

The vehicle according to the invention is advantageously suitable for use also on sandy bottoms.

### Brief Description of the Drawings

Some preferred embodiments of the invention will be described by way of non-limiting example with reference to the accompanying drawings in which:
- Fig.1 is a perspective view of the vehicle according to a preferred embodiment of the invention, with the support structure completely lowered;
- Fig.2 is a top plan view of the vehicle of Fig.1;
- Fig.3 is a side view of the vehicle of Fig. 1, with the support structure completely lowered;
- Fig.4 is a partial side view of the vehicle of Fig. 1, with the support structure in an intermediate inclined configuration;
- Fig.5 is a partial side view of the vehicle of Fig. 1, with the support structure in its hoisted configuration.

### Description of Some Preferred Embodiments

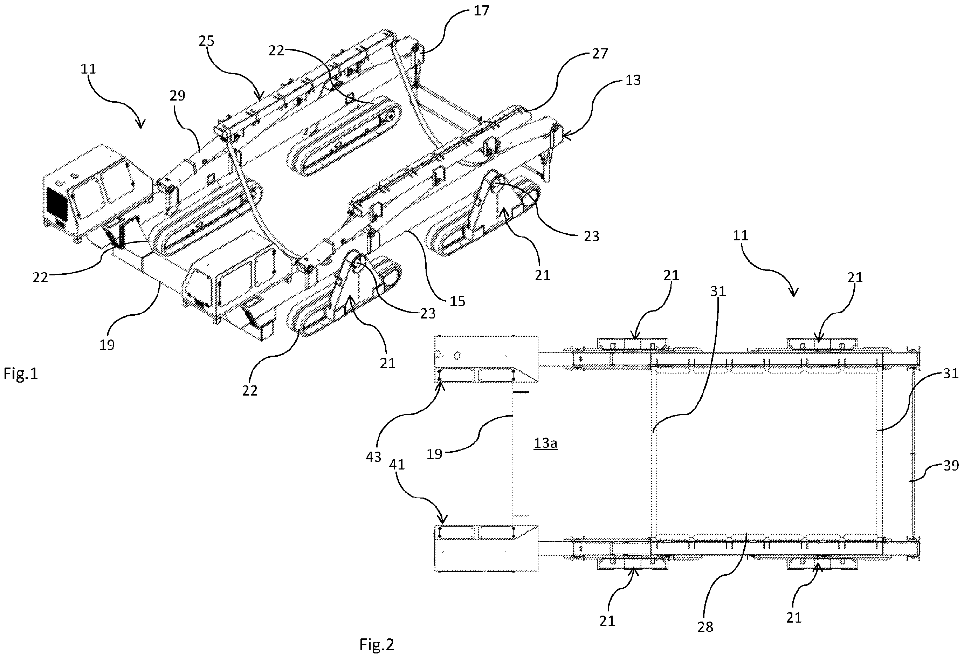

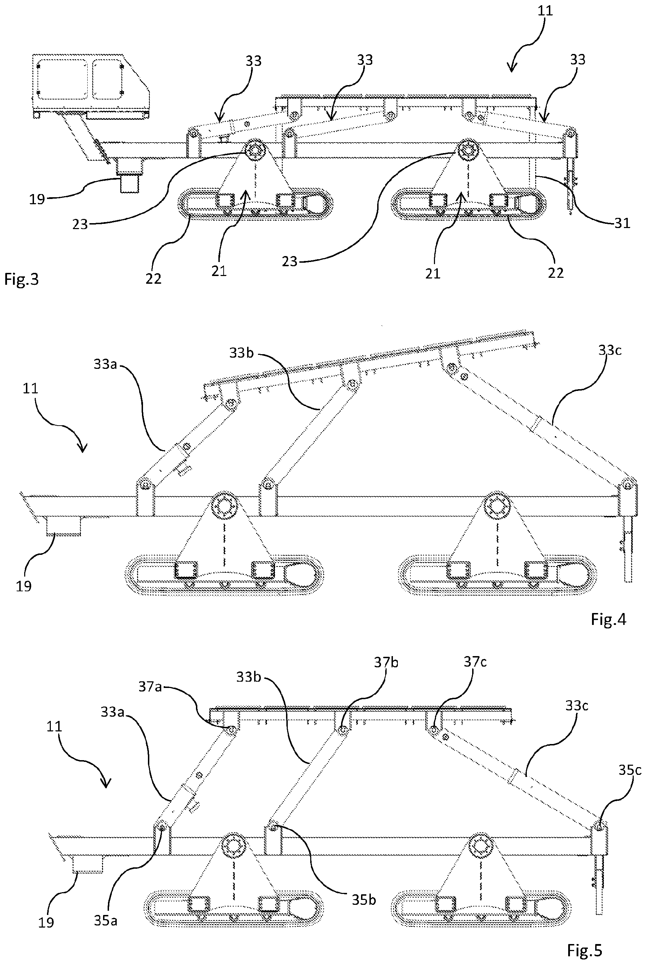

Referring to Figs. 1 to 5, a first embodiment of a vehicle 11 for hauling and launching boats made in accordance with the invention is shown. The vehicle 11 mainly comprises a lower frame 13 provided with a pair of longitudinal beams 15,17.

In addition, the longitudinal beams 15,17 are mutually connected by a cross-bar 19, arranged at one of the ends of the frame 13. By convention this end will be assumed to be the rear end of vehicle 11. The frame 13 is lowerly associated to handling devices 21. In the embodiment example shown, the devices 21 are in a total number of four, two for each side of the vehicle 11. The devices 21 comprise corresponding carriages hinged to the beams 15, 17 at hubs 23. Said devices 21 are therefore tilting relative to the frame 13 depending on the inclination of the ground travelled by the vehicle 11. The tilting of the devices 21 around the hubs 23 can be either idle or hydraulically controlled. The tilting is effected preferably about an axis perpendicular to the beams 15, 17, i.e. transverse relative to the frame 13 of the vehicle.

In a variant embodiment, the cross-bar 19 is of a hydraulically controlled telescopic type so as to reduce the tread spacing, i.e. the transverse dimension of the vehicle 11, for example to minimize the space for storing.

Still referring to the example shown, the devices 21 are arranged along the beams 15,17 so as to define a rear cantilever portion 13a of the frame 13. The devices 21 are provided with hydraulically controlled crawler tracks 22 for the advancing, backing and steering the vehicle 11. The vehicle further comprises a support structure 25 adapted to support the hull of a boat (not shown) relative to the frame 13. The structure 25 is provided with a pair of longitudinal bars 27,29 equipped with transverse slings 31. The slings 31 cooperate with the bars 27,29 for supporting the hull of the boat and, to this aim, the inner part of the bars 27,29 is preferably provided with deformable members 28, made, for example, of plastic material. The members 28 function as supports for the hull of the boat.

Posts 33 inferiorly hinged to the beams 15,17 of the frame 13 and upperly to the bars 27,29 of the support structure 25 are interposed between the frame 13 and the support structure 25. According to the invention, the posts are three in number for each side of the vehicle 11 and the two posts 33a,33c located at the ends are telescopic, whereas the middle post 33b has a fixed length. In the illustrated embodiment, each side of the vehicle 11 therefore comprises three posts 33, a corresponding beam 15,17 and a corresponding bar 27,29. The posts 33 are hinged by means of corresponding lower hinge pins 35a,35b,35c and upper hinge pins 37a,37b,37c. Said lower hinge pins 35a,35b,35c and upper hinge pins 37a,37b,37c are substantially perpendicular to the posts 33, the beams 15,17 and the bars 27,29 and are therefore transverse relative to the vehicle 11.

The support structure 25 is therefore articulated to the frame 13 so as to vary its distance and/or inclination relative to the frame 13 depending on the extension and inclination of the posts 33.

According to the invention, the distance between the lower hinge pin 35b of the middle post 33b and the lower hinge pin 35a of the rear post 33a is substantially the same as the distance between the upper hinge pins 37a, 37b of said posts 33a,33b. The distance between the lower hinge pin 35b of the middle post 33b and the lower hinge pin 35c of the front post 33c, instead, is substantially thrice the distance between the upper hinge pins 37b,37c of said posts 33b,33c.

The posts 33a,33c are preferably hollow and incorporate inside them a corresponding hydraulic cylinder capable of causing the extension and shortening of the posts 33a,33c. In other embodiments, the hydraulic cylinder may be provided outside the post.

The frame 13 is stiffened by at least one transverse tie rod 39 and rearly holds a pair of cabinets 41,43, in which the motors that actuate the hydraulic control circuit of the devices 21 and of the hydraulic cylinders are accommodated.

According to a first embodiment of the invention, the hydraulic cylinders are manually controlled by an operator through an electronic control unit, preferably by means of a radio control. In this way, the operator can maintain the desired height and inclination of the bars 27,29 of the support structure 25 relative to the frame 13 and, consequently, with respect to the ground traveled by the vehicle 11. In particular, the inclination can be manually maintained at an angle such that the hull of the boat received on the support structure 25 is substantially parallel to the water plane of the basin where the vehicle is effecting the hauling and/or launching.

In a second embodiment of the invention, the hydraulic cylinders capable of causing the extension and shortening of the posts 33a, 33c are controlled by an electronic control unit programmed to control said cylinders according to the signal generated by at least one electronic level or similar inclination measuring sensor. According to this embodiment of the invention, the hull of the boat is maintained with the desired inclination with respect to the plane on which the vehicle travels. In particular, such inclination can be maintained automatically at an angle such that the hull is substantially parallel to the water plane of the basin where the vehicle is effecting the hauling and/or launching.

## Claims

1. Vehicle (11) for hauling and launching boats comprising:
- a lower frame (13) provided with a pair of longitudinal beams (15,17) inferiorly associated to handling devices (21) and mutually connected by means of at least one cross-bar (19);
- an upper support structure (25) adapted to support the hull of a boat relative to the frame (13), said structure (25) being provided with a pair of longitudinal bars (27,29) equipped with transverse slings (31) for carrying said hull;
- telescopic posts (33) hinged inferiorly to the beams (15,17) of the frame (13) and superiorly to the bars (27,29) of the support structure (25), whereby the support structure (25) is articulated to the frame (13) and is capable of varying its distance and/or inclination relative to the frame (13) depending on the extension and inclination of the posts (33) wherein the posts (33) are three in number for each side of the vehicle (11) and wherein the two posts (33a,33c) arranged at the ends are telescopic and the middle post (33c) has a fixed length **characterized in that** the posts (33) are inferiorly and upperly hinged to corresponding hinge pins (35a,35b,35c,37a,37b,37c) and wherein the distance between the lower hinge pin (35b) of the middle post (33b) and the lower hinge pin (35a) of a first post (33a) is substantially the same as the distance between the upper hinge pins (37a,37b) of said posts (33a,33b) and wherein the distance between the lower hinge pin (35b) of the middle post (33b) and the lower hinge pin (35c) of the third post (33c) is substantially thrice the distance between the upper hinge pins (37b,37c) of said posts.

2. Vehicle according to claim 1, wherein at least two of said posts (33) for each side of the vehicle (11) are telescopic.

3. Vehicle according to any of the preceding claims, wherein each of the telescopic posts (33) incorporates at least one hydraulic cylinder.

4. Vehicle according to any of the preceding claims, wherein the handling devices (21) comprise carriages tilting around hubs (23) relative to the frame (13) and equipped with hydraulically driven crawler tracks (22).

5. Vehicle according to any of the preceding claims, wherein the frame (13) has a substantially "U"-like or "H"-like shape and comprises at least one transverse stiffening tie rod (39).

6. Vehicle according to claim 3, wherein the hydraulic cylinders are driven by an electronic unit controlled by means of a remote-control device.

7. Vehicle according to any of the preceding claims, wherein the handling devices (21) are in a total number of four, two for each side of the vehicle (11).

8. Vehicle according to any of the preceding claims, wherein the handling devices (21) comprise corresponding carriages hinged to the beams (15,17) at hubs (23), said devices (21) being therefore tilting relative to the frame (13) depending on the inclination of the ground traveled by the vehicle (11).

9. Vehicle according to any of the preceding claims, wherein the cross-bar (19) is of a hydraulically controlled telescopic type so as to reduce the tread spacing, i.e. the transverse dimension of the vehicle (11) in order to minimize the space for storing.

10. Vehicle according to claim 3, wherein the hydraulic cylinders capable of causing the extension and shortening of the posts (33a, 33c) are controlled by an electronic control unit programmed to control said cylinders according to the signal generated by at least one electronic level or similar inclination measuring sensor.

## Patentansprüche

1. Fahrzeug (11) zum Ziehen und Zuwasserlassen von Booten, umfassend:
- einen unteren Rahmen (13), der mit einem Paar von Längsträgern (15, 17) versehen ist, die Transportvorrichtungen (21) untergeordnet zugeordnet sind und durch wenigstens einen Querträger (19) miteinander verbunden sind;
- eine obere Stützstruktur (25), die geeignet ist, den Rumpf eines Bootes relativ zu dem Rahmen (13) zu stützen, wobei die Struktur (25) mit einem Paar von Längsstangen (27, 29) versehen ist, die mit Querschlingen (31) zum Tragen des Rumpfes ausgestattet sind;
- Teleskopstangen (33), die den Trägern (15, 17) des Rahmens (13) untergeordnet und den Stangen (27, 29) der Stützstruktur (25) übergeordnet angelenkt sind, wodurch die Stützstruktur (25) gelenkig an dem Rahmen (13) angebracht ist und in der Lage ist, ihren Abstand und/oder ihre Neigung relativ zu dem Rahmen (13) in Abhängigkeit vom Ausfahren und der Neigung der Stangen (33) zu variieren
wobei es drei Stangen (33) für jede Seite des Fahrzeugs (11) gibt und wobei die beiden an den Enden angeordneten Stangen (33a, 33c) teleskopisch sind und die mittlere Stange (33c) eine feste Länge hat, **dadurch gekennzeichnet, dass** die Stangen (33) unten und oben an entsprechenden Scharnierstiften (35a, 35b, 35c, 37a, 37b,37c) angelenkt sind und wobei der Abstand zwischen dem unteren Scharnierstift (35b) der mittleren Stange (33b) und dem unteren Scharnierstift (35a) einer ersten Stange (33a) im Wesentlichen derselbe ist wie der Abstand zwischen den oberen Scharnierstiften (37a, 37b) dieser Stangen (33a, 33b) und wobei der Abstand zwischen dem unteren Scharnierstift (35b) der mittleren Stange (33b) und dem unteren Scharnierstift (35c) der dritten Stange (33c) im Wesentlichen das Dreifache des Abstands zwischen den oberen Scharnierstiften (37b, 37c) dieser Stangen ist.

2. Fahrzeug gemäß Anspruch 1, wobei wenigstens zwei der Stangen (33) für jede Seite des Fahrzeugs (11) teleskopisch sind.

3. Fahrzeug gemäß einem der vorhergehenden Ansprüche, wobei jede der Teleskopstangen (33) wenigstens einen Hydraulikzylinder aufweist.

4. Fahrzeug gemäß einem der vorhergehenden Ansprüche, wobei die Transportvorrichtungen (21) um Naben (23) relativ zum Rahmen (13) schwenkbare Fahrgestelle umfassen, die mit hydraulisch angetriebenen Raupenketten (22) ausgestattet sind.

5. Fahrzeug gemäß einem der vorhergehenden Ansprüche, wobei der Rahmen (13) eine im Wesentlichen "U"-ähnliche oder "H"-ähnliche Form aufweist und wenigstens eine quer verlaufende, versteifende Spurstange (39) umfasst.

6. Fahrzeug gemäß Anspruch 3, wobei die Hydraulikzylinder von einer elektronischen Einheit angetrieben werden, die mittels einer Fernbedienungseinrichtung gesteuert wird.

7. Fahrzeug gemäß einem der vorhergehenden Ansprüche, wobei die Transportvorrichtungen (21) in einer Gesamtzahl von vier vorhanden sind, zwei für jede Seite des Fahrzeugs (11).

8. Fahrzeug gemäß einem der vorhergehenden Ansprüche, wobei die Transportvorrichtungen (21) entsprechende Fahrgestelle umfassen, die an den Trägern (15, 17) an Naben (23) angelenkt sind, wobei die Vorrichtungen (21) daher in Abhängigkeit von der Neigung des von dem Fahrzeug (11) befahrenen Bodens relativ zu dem Rahmen (13) schwenkbar sind.

9. Fahrzeug gemäß einem der vorhergehenden Ansprüche, wobei der Querträger (19) hydraulisch gesteuert teleskopierbar ist, um den Laufflächenabstand, d.h. die Querabmessung des Fahrzeugs (11), zu verringern, um den Stauraum zu minimieren.

10. Fahrzeug gemäß Anspruch 3, wobei die Hydraulikzylinder, die das Ausfahren und Einfahren der Stangen (33a, 33c) bewirken können, von einer elektronischen Steuereinheit gesteuert werden, die so programmiert ist, dass sie die Zylinder entsprechend dem Signal steuert, das von wenigstens einem elektronischen Niveau- oder ähnlichen Neigungsmessungssensor erzeugt wird.

## Revendications

1. Véhicule (11) de halage et de lancement de bateaux comprenant :
- un cadre inférieur (13) pourvu d'une paire de traverses longitudinales (15, 17) associées en partie inférieure à des dispositifs de manutention (21) et raccordées mutuellement au moyen d'au moins une barre transversale (19) ;
- une structure de support supérieure (25) adaptée pour supporter la coque d'un bateau par rapport au cadre (13), ladite structure (25) étant pourvue d'une paire de barres longitudinales (27, 29) équipées d'élingues transversales (31) pour porter ladite coque ;
- des poteaux télescopiques (33) fixés par charnière en partie inférieure aux traverses (15, 17) du cadre (13) et en partie supérieure aux barres (27, 29) de la structure de support (25), moyennant quoi la structure de support (25) est articulée sur le cadre (13) et est capable de faire varier sa distance et/ou son inclinaison par rapport au cadre (13) en fonction de l'extension et de l'inclinaison des poteaux (33)
dans lequel les poteaux (33) sont au nombre de trois pour chaque côté du véhicule (11) et dans lequel les deux poteaux (33a, 33c) agencés aux extrémités sont télescopiques et le poteau du milieu (33c) a une longueur fixe, **caractérisé en ce que** les poteaux (33) sont fixés par charnière en partie inférieure et en partie supérieure à des broches de charnière (35a, 35b, 35c, 37a, 37b, 37c) correspondantes et dans lequel la distance entre la broche de charnière inférieure (35b) du poteau du milieu (33b) et la broche de charnière inférieure (35a) d'un premier poteau (33a) est sensiblement la même que la distance entre les broches de charnière supérieures (37a, 37b) desdits poteaux (33a, 33b) et dans lequel la distance entre la broche de charnière inférieure (35b) du poteau du milieu (33b) et la broche de charnière inférieure (35c) du troisième poteau (33c) est sensiblement le triple de la distance entre les broches de charnière supérieures (37b, 37c) desdits poteaux.

2. Véhicule selon la revendication 1, dans lequel au moins deux desdits poteaux (33) pour chaque côté du véhicule (11) sont télescopiques.

3. Véhicule selon l'une quelconque des revendications précédentes, dans lequel chacun des poteaux télescopiques (33) incorpore au moins un vérin hydraulique.

4. Véhicule selon l'une quelconque des revendications précédentes, dans lequel les dispositifs de manutention (21) comprennent des chariots inclinables autour de moyeux (23) par rapport au cadre (13) et équipés de chenilles à entraînement hydraulique (22).

5. Véhicule selon l'une quelconque des revendications précédentes, dans lequel le cadre (13) a une forme sensiblement en « U » ou en « H » et comprend au moins un tirant de raidissement transversal (39).

6. Véhicule selon la revendication 3, dans lequel les vérins hydrauliques sont entraînés par une unité électronique commandée au moyen d'un dispositif de télécommande.

7. Véhicule selon l'une quelconque des revendications précédentes, dans lequel les dispositifs de manutention (21) sont au nombre total de quatre, deux pour chaque côté du véhicule (11).

8. Véhicule selon l'une quelconque des revendications précédentes, dans lequel les dispositifs de manutention (21) comprennent des chariots correspondants fixés par charnière aux traverses (15, 17) au niveau de moyeux (23), lesdits dispositifs (21) étant par conséquent inclinables par rapport au cadre (13) en fonction de l'inclinaison du sol sur lequel le véhicule (11) circule.

9. Véhicule selon l'une quelconque des revendications précédentes, dans lequel la barre transversale (19) est d'un type télescopique à commande hydraulique de façon à réduire l'espacement de bande de roulement, c'est-à-dire la dimension transversale du véhicule (11) afin de minimiser l'espace de stockage.

10. Véhicule selon la revendication 3, dans lequel les vérins hydrauliques capables de provoquer l'extension et le raccourcissement des poteaux (33a, 33c) sont commandés par une unité de commande électronique programmée pour commander lesdits vérins selon le signal généré par au moins un capteur de mesure d'inclinaison de niveau électronique ou similaire.
